# EUROPÄISCHE PATENTANMELDUNG

(11) **EP 4 714 680 A1**
(43) Veröffentlichungstag der Anmeldung: **25.03.2026**
(21) Anmeldenummer: 25194450.0
(22) Anmeldetag: 06.08.2025
(51) Int. Cl.: B60C 11/11

(54) **FAHRZEUGLUFTREIFEN**

(30) Priorität: 19.09.2024 DE 102024208972
(71) Anmelder: Continental Reifen Deutschland GmbH, 30175 Hannover (DE)
(72) Erfinder: Rittweger, Stefan, 30175 Hannover (DE)
(74) Vertreter: Continental Corporation

(57) **Zusammenfassung**

Die Erfindung betrifft einen Fahrzeugluftreifen (1), umfassend einen Laufstreifen (2) mit einer ersten Profilblockreihe (3) aus in Umfangsrichtung (7) hintereinander angeordneten und durch Querrillen (6) voneinander getrennten, sechseckigen ersten Blöcken (8), wobei die ersten Blöcke (8) einander parallele Kantenpaare (11, 12, 13) aufweisen sowie in Bezug auf die Umfangsrichtung (7) des Fahrzeugluftreifens (1) jeweils spiegelsymmetrisch ausgebildet sind, wobei Kanten (14a, 14b) eines ersten Kantenpaares (11) des jeweiligen ersten Blocks (8) parallel zur Umfangsrichtung (7) verlaufen und die übrigen Kanten (15a, 15b, 16a, 16b) jeweils mit der Umfangsrichtung (7) sowie mit einer axialen Richtung (17) des Fahrzeugluftreifens (1) einen Winkel einschließen, wobei die Kanten (14a, 14b) des ersten Kantenpaares (11) des jeweiligen ersten Blocks (8) wenigstens abschnittsweise gefast ausgebildet sind.

## Beschreibung

Die Erfindung betrifft einen Fahrzeugluftreifen, umfassend einen Laufstreifen mit einer ersten Profilblockreihe aus in Umfangsrichtung hintereinander angeordneten und durch Querrillen voneinander getrennten, sechseckigen ersten Blöcken, wobei die ersten Blöcke einander parallele Kantenpaare aufweisen sowie in Bezug auf die Umfangsrichtung des Fahrzeugluftreifens jeweils spiegelsymmetrisch ausgebildet sind, wobei Kanten eines ersten Kantenpaares des jeweiligen ersten Blocks parallel zur Umfangsrichtung verlaufen und die übrigen Kanten jeweils mit der Umfangsrichtung sowie mit einer axialen Richtung des Fahrzeugluftreifens einen Winkel einschließen. Der Fahrzeugluftreifen weist ferner Seitenwände auf, die auf beiden Seiten des Laufflächenabschnitts angeordnet sind. Außerdem weist der Fahrzeugluftreifen Wulste auf, die jeweils in radialer Richtung des Fahrzeugluftreifens auf einer Innenseite der zugehörigen Seitenwand angeordnet sind.

Die EP 2 390 113 B1 offenbart beispielsweise einen Fahrzeugluftreifen, aufweisend einen Laufstreifen, der in Reifenumfangsrichtung verläuft, um eine Ringform zu bilden. Der Laufstreifen umfasst eine Mehrzahl von Umfangsrillen, die eine Rillenbreite von nicht weniger als 3,0 mm aufweisen und in Reifenumfangsrichtung verlaufen, während sie sich schlängeln, und eine Mehrzahl von Querrillen, die eine Rillenbreite von nicht weniger als 3,0 mm aufweisen und ein Paar Umfangsrillen, die in Reifenbreitenrichtung benachbart sind, miteinander verbinden. Die Umfangsrillen und die Querrillen teilen zwei Reihen vieleckiger Blöcke ein, die durch versetztes Anordnen einer Mehrzahl vieleckiger Blöcke mit einer vieleckigen Form mit nicht weniger als fünf Ecken entlang der Reifenumfangsrichtung gebildet werden. Eine in Reifenumfangsrichtung verlaufende vieleckige Rippe ist zwischen den zwei Reihen vieleckiger Blöcke angeordnet, wobei die vieleckige Rippe angrenzend an die zwei Reihen vieleckiger Blöcke angeordnet ist.

Bei Profilen von Fahrzeugluftreifen mit Straßen- und Offroad-Anteil, wie beispielsweise sogenannte "All-Terrain"-Reifen, besteht regelmäßig ein Zielkonflikt zwischen den Straßeneigenschaften, insbesondere dem Bremsverhalten, dem Trockenhandling und den akustischen Eigenschaften, sowie den Offroadeigenschaften, insbesondere den Traktionseigenschaften.

Die Aufgabe der vorliegenden Erfindung besteht darin, einen Fahrzeugluftreifen bereitzustellen, der den genannten Zielkonflikt besser löst. Die Aufgabe wird gelöst durch den Gegenstand von Patentanspruch 1. Bevorzugte Ausführungsformen sind Gegenstand der abhängigen Ansprüche.

Ein erfindungsgemäßer Fahrzeugluftreifen umfasst einen Laufstreifen mit einer ersten Profilblockreihe aus in Umfangsrichtung hintereinander angeordneten und durch Querrillen voneinander getrennten, sechseckigen ersten Blöcken, wobei die ersten Blöcke einander parallele Kantenpaare aufweisen sowie in Bezug auf die Umfangsrichtung des Fahrzeugluftreifens jeweils spiegelsymmetrisch ausgebildet sind, wobei Kanten eines ersten Kantenpaares des jeweiligen ersten Blocks parallel zur Umfangsrichtung verlaufen und die übrigen Kanten jeweils mit der Umfangsrichtung sowie mit einer axialen Richtung des Fahrzeugluftreifens einen Winkel einschließen, wobei die Kanten des ersten Kantenpaares des jeweiligen ersten Blocks wenigstens abschnittsweise gefast ausgebildet sind. Zumindest die ersten Blöcke sind zu Realisierung der Traktionseigenschaften des Fahrzeugluftreifens im Offroad-Bereich vorgesehen, weisen aber gleichzeitig durch die Fasen an den umfangsorientierten Flanken gute Trockenhandling-Eigenschaften im Straßengebrauch auf.

Der genannte Zielkonflikt zwischen Straßen- und Offroadeigenschaften des Fahrzeugluftreifens wird dadurch gelöst, dass die freistehenden ersten Blöcke so geformt sind, dass diese im Betrieb einerseits weich in die Bodenaufstandsfläche, auch "Footprint" genannt, einrollen und gleichzeitig seitlich stabilisiert werden. Dadurch werden einerseits die akustischen Eigenschaften als auch das Handling des Fahrzeugluftreifens auf trockener Fahrbahn verbessert, ohne im Offroadgebrauch Traktion zu verlieren.

Das Trockenhandling bezieht sich auf das Fahrverhalten und die HandlingEigenschaften eines Fahrzeugs bei trockenen Straßenbedingungen. Dabei geht es darum, wie gut der Reifen die Kräfte, die während der Fahrt auf trockener Fahrbahn auftreten, verarbeiten und in Fahrstabilität, Lenkpräzision und Sicherheit umsetzen kann. Bei Kurvenfahrten, Bremsmanövern und Ausweichmanövern wirken Querkräfte, die der Reifen aufnimmt und in Bodenhaftung umwandelt, um ein Ausbrechen oder Schleudern zu verhindern. Die Fasen an den umfangsorientierten Kanten des jeweiligen ersten Blocks verbessern das Trockenhandling, da sie verhindern, dass sich der jeweilige erste Block bei auftretenden Querkräften einrollt, sondern stabil bleibt.

Die jeweilige Fase kann sich über die gesamte Längserstreckung der jeweiligen umfangsorientierten Kante des ersten Kantenpaares erstrecken. Die jeweilige Fase kann unterbrochen und/oder in seiner Längserstreckung an die Geometrie eines gegenüberliegenden Blocks einer in Querrichtung benachbarten Profilblockreihe angepasst sein. Vorzugsweise weist die jeweilige Fase der jeweiligen gefasten Kante in Bezug auf eine Oberfläche des Laufstreifens einen Winkel zwischen 40° und 50°, bevorzugt zwischen 42° und 48°, in einem Ausführungsbeispiel etwa 45°, auf.

Der jeweilige erste Block weist sechs Kanten auf, die in ihrem Erstreckungsverlauf um einen Oberflächenbereich des jeweiligen ersten Blocks ein Sechseck bilden. Der jeweilige erste Block ist also in der Draufsicht in Form eines Hexagons ausgebildet und weist demnach drei Kantenpaare auf, wobei je zwei unmittelbar benachbarte Kanten über eine Ecke miteinander verbunden und mit einem Winkel zueinander angeordnet sind. Die Kanten des ersten Kantenpaares sind umfangsorientierte Kanten des jeweiligen ersten Blocks. Die Kanten des zweiten und dritten Kantenpaares sind dazu schräg angeordnete Kanten mit einem umfangsorientierten Anteil und einem in Querrichtung orientierten Anteil. Mithin sind die Kanten des zweiten und dritten Kantenpaares diagonal orientierte Kanten. Je eine zweite und eine dritte Kante bilden in Umfangsrichtung gemeinsam ein pfeilartiges Ende des jeweiligen ersten Blocks.

Als Kantenpaar sind die auf gegenüberliegenden Seiten des jeweiligen ersten Blocks angeordneten Kanten zu verstehen. Die jeweilige Kante begrenzt eine Oberfläche des jeweiligen Blocks in der Ebene der Oberfläche des Laufstreifens. Die jeweilige Kante ist, wenn hier nichts anderes angegeben ist, eine Linie, die zwei Eckpunkte des jeweiligen Blocks miteinander verbindet. Die Kante kann wenigstens abschnittsweise gefast sein.

Die symmetrische Ausgestaltung des jeweiligen ersten Blocks stellt sicher, dass sich der jeweilige erste Block unabhängig der Drehrichtung des Fahrzeugluftreifens sowie unabhängig der Querkraftrichtung bzw. bei in axialer Richtung des Fahrzeugluftreifens bzw. in Querrichtung des Laufstreifens im Wesentlichen gleichermaßen verhält. Die Umfangsrichtung des Fahrzeugluftreifens ist auch als Laufrichtung des Fahrzeugluftreifens zu verstehen.

Vorzugsweise sind die ersten Blöcke der ersten Profilblockreihe sowohl in Umfangsrichtung als auch in axialer Richtung des Fahrzeugluftreifens teilweise überlappend angeordnet sind. Unter "überlappend" ist zu verstehen, dass die ersten Blöcke der ersten Profilblockreihe sowohl in Umfangsrichtung als auch in axialer Richtung versetzt zueinander angeordnet sind, derart, dass aufeinander folgende Blöcke in Umfangsrichtung und in Querrichtung teilweise aneinander vorbeigeführt sind. Dadurch steht beim Abrollen des Fahrzeugluftreifens auf der Fahrbahn zu jeder Zeit mindestens einer der ersten Blöcke in Kontakt mit der Fahrbahn. Wenn einer der ersten Blöcke aus dem Footprint herausgeführt wird, tritt ein in Umfangsrichtung unmittelbar nachfolgender erster Block bereits in den Footprint ein oder befindet sich bereits mit im Footprint des Fahrzeugluftreifens.

Bevorzugt sind die ersten Blöcke der ersten Profilblockreihe in Umfangsrichtung alternierend seitlich zueinander versetzt angeordnet. Mit anderen Worten sind die ersten Blöcke über den Umfang des Fahrzeugluftreifens zickzackförmig oder zickzackformähnlich angeordnet, wobei die jeweils übernächsten ersten Blöcke der ersten Profilblockreihe in Umfangsrichtung fluchtend zueinander angeordnet sind. Die Hälfte der ersten Blöcke der ersten Profilblockreihe sind demnach nach links versetzt und die andere Hälfte der ersten Blöcke der ersten Profilblockreihe sind demnach nach rechts versetzt angeordnet. Dabei sind die zwischen den ersten Blöcken ausgebildeten Querrillen in Umfangsrichtung wechselweise orientiert angeordnet. Mit anderen Worten ist eine erste Querrille zwischen zwei benachbarten ersten Blöcken in eine Schrägrichtung ausgerichtet und eine zweite Querrille des darauffolgenden Blockpaares der ersten Profilblockreihe ist in eine entgegengesetzte Schrägrichtung mit demselben Winkelbetrag ausgerichtet.

Ferner bevorzugt sind Kanten des zweiten Kantenpaares des jeweiligen ersten Blocks mit einem ersten Winkel zwischen 15° und 75° in Bezug auf eine Querrichtung des Laufstreifens ausgerichtet und Kanten des dritten Kantenpaares des jeweiligen ersten Blocks sind mit einem zweiten Winkel zwischen -15° und -75° in Bezug auf eine Querrichtung des Laufstreifens ausgerichtet. Mit anderen Worten sind je eine Kante des zweiten Kantenpaares und eine Kante des dritten Kantenpaares in Bezug auf die Umfangsrichtung entgegengesetzt und betragsmäßig gleich angewinkelt. Vorzugsweise beträgt der jeweilige Winkel zwischen 20° und 70° bzw. -20° und -70°, bevorzugt zwischen 35° und 60° bzw. -35° und -60°, nach einem Ausführungsbeispiel zwischen 40° und 55° bzw. -40° und -55°. Die Querrichtung des Laufstreifens ist senkrecht, also mit einem Winkel von 90° zur Umfangsrichtung des Fahrzeugluftreifens bzw. Laufstreifens ausgerichtet. Aufgrund der symmetrischen Ausgestaltung des jeweiligen sechseckigen ersten Blocks sind der jeweilige erste und zweite Winkel betragsmäßig gleich groß, sodass der jeweilige erste Block in beide Drehrichtungen eine pfeilartige Spitze bzw. ein pfeilartiges Ende aufweist. In diesem Sinn ist zwischen einer der Kanten des zweiten Kantenpaares und einer der unmittelbar dazu benachbarten Kanten des dritten Kantenpaares eine jeweilige Ecke ausgebildet ist, die auf der Symmetrieachse des jeweiligen ersten Blocks, die parallel zur Umfangsrichtung verläuft, liegt. Die jeweilige genannte Ecke bildet das pfeilartige Ende des jeweiligen ersten Blocks in Umfangsrichtung aus, wodurch ein spitzer Einlauf des jeweiligen ersten Blocks beim Abrollen im Footprint realisiert wird. Der spitze Einlauf stellt sicher, dass der jeweilige erste Block im Betrieb weich und damit leise in Kontakt mit der Fahrbahn gelangt. Mit zwei Ecken an den in Umfangsrichtung entgegengesetzten Enden des jeweiligen ersten Blocks ist diese Funktion unabhängig der Drehrichtung des Fahrzeugluftreifens.

Die Kanten des jeweiligen ersten Blocks weisen jeweils eine Kantenlänge von mindestens 20 mm auf. Dabei können alle Kanten gleich lang ausgebildet sein, so dass der jeweilige erste Block als regelmäßiges Sechseck mit sechs Symmetrieachsen ausgebildet ist. Wenn die Kanten des ersten Kantenpaares genauso lang sind wie die übrigen Kanten des zweiten und dritten Kantenpaares, dann weist der jeweilige erste Block in der Draufsicht die Form einer Wabe mit gleich langen Seiten auf.

Denkbar ist, dass die Kanten des ersten Kantenpaares, also die umfangsorientierten Kanten, jeweils länger sind als die schräg orientierten Kanten des zweiten bzw. dritten Kantenpaares. Aufgrund des symmetrischen Aufbaus des jeweiligen ersten Blocks, insbesondere in Bezug auf die Umfangsrichtung, sind die Kanten des zweiten und dritten Kantenpaares jeweils gleich lang ausgebildet. Ebenso sind die Kanten des ersten Kantenpaares gleich lang ausgebildet. In diesem Sinn ist die Länge der jeweiligen Kante des ersten Kantenpaares des jeweiligen ersten Blocks größer gleich der jeweiligen Länge der übrigen Kanten desselben ersten Blocks. Wenn die Kanten des ersten Kantenpaares länger sind als die übrigen Kanten, ist der jeweilige erste Block in Umfangsrichtung langgestreckt ausgebildet. Die Kanten des ersten Kantenpaares sind vorzugsweise 5% bis 30% länger als die jeweiligen Kanten des zweiten und dritten Kantenpaares.

Die Erfindung schließt die technische Lehre ein, dass der Laufstreifen in axialer Richtung des Fahrzeugluftreifens an jedem Ende eine weitere Profilblockreihe aus in Umfangsrichtung hintereinander angeordneten, polygonalen Blöcken aufweist. Der Laufstreifen weist also mindestens drei Profilblockreihen auf, wobei die Blöcke der zweiten und dritten Profilblockreihe komplementär zur Ausformung und Anordnung der ersten Blöcke der ersten Profilblockreihe ausgebildet sind. Entsprechend sind auch die Umfangsrillen zwischen je zwei in Querrichtung benachbarten Profilblockreihen ausgebildet. Ein polygonaler Block bezieht sich auf ein speziell gestaltetes Segment der zweiten bzw. dritten Profilblockreihe, der eine mehrseitige (polygonale) Form hat. Die Blöcke, auch Profilblöcke genannt, sind die erhabenen Bereiche auf der Lauffläche des Fahrzeugluftreifens, die direkt mit der Fahrbahn in Kontakt stehen und für die Traktion sowie das Handling des Fahrzeugs verantwortlich sind. Die Blöcke der zweiten bzw. dritten Profilblockreihe können in der Draufsicht eine komplexe geometrische Form mit mehreren Kanten, wie zum Beispiel ein Fünfeck, Sechseck oder andere unregelmäßige Polygone, aufweisen. Die Form der Blöcke der zweiten bzw. dritten Profilblockreihe können zur Verbesserung der Traktion und Stabilität des Fahrzeugluftreifens, zur optimierten Wasserableitung bzw. zur Vermeidung von Aquaplaning sowie zur Geräuschreduktion ausgebildet sein.

Vorzugsweise ist zwischen einer zweiten Profilblockreihe am in axialer Richtung des Laufstreifens ersten Ende und der ersten Profilblockreihe eine erste Umfangsrille ausgebildet und zwischen einer dritten Profilblockreihe am in axialer Richtung des Laufstreifens zweiten Ende und der ersten Profilblockreihe ist eine zweite Umfangsrille ausgebildet. Die jeweilige Umfangsrille ist im Querschnitt im Wesentlichen U-förmig ausgebildet. Wenn nur eine einzige Profilblockreihe mit sechseckigen Blöcken, hier also die erste Profilblockreihe, zwischen der zweiten und dritten Profilblockreihe angeordnet ist, dann wird die jeweilige Umfangsrille einerseits durch eine erste Rillenflanke einer Kante des ersten Kantenpaares des jeweiligen ersten Blocks und andererseits durch eine zweite Rillenflanke einer Kante eines der polygonalen Blöcke der zweiten bzw. dritten Profilblockreihe seitlich, also in Querrichtung, begrenzt. Die jeweilige Umfangsrille ist durch einen Rillengrund, eine an der ersten Profilblockreihe ausgebildete erste Rillenflanke und eine an der zweiten bzw. dritten Profilblockreihe ausgebildete zweite Rillenflanke begrenzt.

Bei in Umfangsrichtung seitlich zueinander versetzt angeordneten ersten Blöcken schlängelt sich die Umfangsrille mit einer im Wesentlichen konstanten Breite zwischen den ersten Blöcken einerseits und den zweiten bzw. dritten Blöcken der zweiten bzw. dritten Profilblockreihe andererseits über den Umfang des Fahrzeugluftreifens. Mithin ist die erste Profilblockreihe von der zweiten Profilblockreihe bzw. von der dritten Profilblockreihe durch eine jeweilige zickzackförmig oder zickzackformähnlich verlaufende Umfangsrille getrennt.

Wenn weitere Profilblockreihen mit sechseckigen Blöcken vorgesehen sind, können auch weitere Umfangsrillen vorgesehen sein, die zwischen den Profilblockreihen mit sechseckigen Blöcken angeordnet sind.

Vorzugsweise weisen zweite Blöcke der zweiten Profilblockreihe und/oder dritte Blöcke der dritten Profilblockreihe an einer der jeweiligen Umfangsrille gegenüberliegenden Seite einer Kante des ersten Kantenpaares des jeweiligen ersten Blocks eine sich im Wesentlichen parallel dazu erstreckende Kante auf, die wenigstens abschnittsweise gefast ausgebildet ist. Mit anderen Worten weisen Kanten der zweiten bzw. dritten Blöcke, deren Rillenflanke eine Umfangsrille mit einer Rillenflank bzw. Kante des ersten Kantenpaares des jeweiligen ersten Blocks seitlich begrenzt, ebenfalls eine Fase auf. Hinsichtlich der Fase des zweiten bzw. dritten Blocks sei auf obige Ausführungen zur Fase an den umfangsorientierten Kanten des ersten Kantenpaares des jeweiligen ersten Blocks verwiesen.

Die genannten Umfangsrillen erstrecken sich, insbesondere wenn die ersten Blöcke in Umfangsrichtung seitlich zueinander versetzt angeordnet sind, nicht ausschließlich in Umfangsrichtung. Die jeweilige Umfangsrille ist vielmehr in umfangsorientierte Abschnitte und schräg oder quer zur Umfangsrichtung orientierte Abschnitte unterteilt. In der einfachsten Form sind diese Abschnitte derart ausgebildet und ausgeformt, dass die Umfangsrille eine über den Umfang im Wesentlichen konstante Querschnittsbreite aufweist.

In einer alternativen Ausführungsform sind die umfangsorientierten Abschnitte der jeweiligen Umfangsrille im Querschnitt breiter ausgebildet als die schräg oder quer zur Umfangsrichtung orientierten Abschnitte derselben Umfangsrille und/oder als die Querrillen zwischen den ersten Blöcken der ersten Profilblockreihe. Demnach weist in einem Beispiel die jeweilige Umfangsrille einen sich über den Umfang des Fahrzeugluftreifens ändernden Querschnitt auf. Alternativ oder ergänzend sind die Querrillen der ersten Profilblockreihe schmaler ausgebildet als die umfangsorientierten Abschnitte. Damit wird das Rillenvolumen an die Anforderungen angepasst. Insbesondere kann eine Verbesserung der akustischen Eigenschaften des Fahrzeugluftreifens während des Betriebs realisiert werden. Ferner können aufgrund der lokal breiteren Umfangsrillen die Aquaplaning-Eigenschaften des Fahrzeugluftreifens verbessert werden. Mithin wird der Wasserabtransport während der Fahrt optimiert. Die Querschnittsbreite der Querrillen und der schräg oder quer zur Umfangsrichtung orientierten Abschnitte der jeweiligen Umfangsrille kann identisch sein.

Vorzugsweise weisen die Umfangsrillen und die Querrillen eine Profiltiefe zwischen 7,5 mm und 15 mm, bevorzugt zwischen 8 mm und 10 mm, auf. Je nach Anwendungsfall kann die bevorzugte Profiltiefe variieren. Mit steigendem Offroad-Anteil nimmt auch die Profiltiefe zu. Beispielsweise können für sogenannte Allterrain-Fahrzeugluftreifen (kurz "AT"-Reifen) Profiltiefen von 8 mm bis 15 mm vorteilhaft sein.

In einem Ausführungsbeispiel sind die ersten Blöcke der ersten Profilblockreihe in der Draufsicht im Wesentlichen identisch ausgebildet. Alternativ können die ersten Blöcke der ersten Profilblockreihe unterschiedlich, insbesondere mit unterschiedlich langen umfangsorientierten Kanten des ersten Kantenpaares, ausgebildet sein.

In einem weiteren Ausführungsbeispiel weist jeder erste Block wenigstens einen Feineinschnitt auf, der einen sich im Wesentlichen in Umfangsrichtung erstreckenden ersten Schenkel sowie einen damit verbundenen zweiten Schenkel und dritten Schenkel aufweist, wobei der zweite und dritte Schenkel in Bezug auf die Längserstreckung des ersten Schenkels spiegelsymmetrisch ausgeformt sowie jeweils mit der Umfangsrichtung sowie mit einer Querrichtung des Fahrzeugluftreifens einen Winkel einschließen. Anders gesagt ist der Feineinschnitt des jeweiligen ersten Blocks in Draufsicht Y-förmig ausgebildet. Feineinschnitte verleihen den Blöcken eine besondere Elastizität und verbessern den Fahrkomfort sowie das Bremsverhalten des Fahrzeugluftreifens. Sie verbessern zudem die Traktion auf nassen und rutschigen Oberflächen und führen Wasser von der Reifenoberfläche ab. Der Feineinschnitt ist auf der dem befahrenen Untergrund zugewandten Oberfläche des Laufstreifens auf dem jeweiligen ersten Block ausgebildet. Selbstverständlich können auch auf den zweiten und/oder dritten Blöcken Feinabschnitte vorgesehen und angeordnet sein.

Der Fahrzeugluftreifen kann vorteilhaft als Geländereifen, auch Offroad-Reifen genannt, als normaler PKW-Straßenreifen oder als sogenannter "All Terrain"-Reifen eingesetzt werden. All Terrain Reifen haben, insbesondere im Vergleich zu Geländereifen (auch Mud Terrain Reifen genannt), ein weniger aggressives Reifenprofil, was ihnen ermöglicht, trotz ihrer guten Geländeeigenschaften auch auf der Straße gute Fahreigenschaften zu bieten. Sie sind im Gelände den normalen Straßenreifen in der Performance, insbesondere der Traktion, überlegen und realisieren bei matschigen und schlammigen Bedingungen gute Fahreigenschaften. Demnach ist der erfindungsgemäße Fahrzeugluftreifen für Geländefahrzeuge wie Baumaschinen, Landmaschinen oder dergleichen geeignet, die sowohl im Gelände als auch auf der Straße bewegt werden.

Weitere Merkmale, Vorteile und Einzelheiten der Erfindung werden nun anhand der Zeichnungen, die ein bevorzugtes Ausführungsbeispiel der Erfindung zeigen, näher beschrieben, wobei gleiche oder ähnliche Bauteile mit demselben Bezugszeichen versehen sind. Dabei zeigen
- Fig. 1: eine schematische Perspektivdarstellung eines Abschnitts eines Laufstreifens eines erfindungsgemäßen Fahrzeugluftreifens gemäß einer bevorzugten Ausführungsform der Erfindung, und
- Fig. 2: eine detailliertere Perspektivdarstellung des Abschnitts des Laufstreifens nach Fig. 1.

Gemäß der Erfindung ausgeführte Fahrzeugluftreifen 1 sind Reifen für Kraftfahrzeuge, insbesondere für mehrspurige Kraftfahrzeuge, vorzugsweise Reifen für Offroad-, All Terrain- und Straßenanwendungen. Der Fahrzeugluftreifen 1 ist insbesondere für eine Baumaschine, eine Landmaschine oder dergleichen einsetzbar, die sowohl im Gelände als auch auf der Straße eingesetzt werden kann und unter beiden Bedingungen gute Fahreigenschaften, insbesondere eine gute Traktion sowie ein verbessertes Trockenhandling, besitzt.

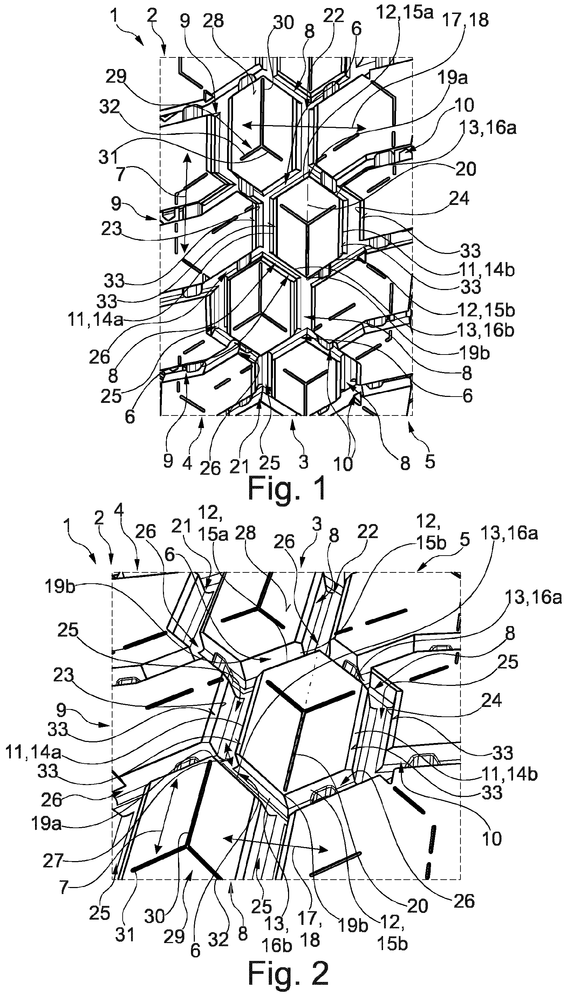

Fig. 1 und Fig. 2 zeigen einen Ausschnitt eines Laufstreifens 2 des Fahrzeugluftreifens 1 aus unterschiedlichen Perspektiven. Der Laufstreifen 2 umfasst vorliegend drei Profilblockreihen 3, 4, 5, wovon die erste Profilblockreihe 3, zwischen der links dargestellten zweiten Profilblockreihe 4 und der rechts dargestellten dritten Profilblockreihe 5 angeordnet ist. Die zweite und dritte Profilblockreihe 4, 5 bilden hier die axialen Enden des Laufstreifens 2.

Zwischen je zwei benachbarten Profilblockreihen 3, 4, 5 ist eine Umfangsrille 21, 22 angeordnet, welche die beiden benachbarten Profilblockreihen 3, 4, 5 voneinander trennen. Die Umfangsrillen 21, 22 erstrecken sich vorliegend jeweils in Form einer Zickzacklinie über den Umfang des Fahrzeugluftreifens 1. Jeden Profilblockreihe 3, 4, 5 weist in Umfangsrichtung 7 des Laufstreifens 2 bzw. des Fahrzeugluftreifens 1 hintereinander angeordnete Blöcke 8, 9, 10 auf, wobei die ersten Blöcke 8 der ersten Profilblockreihe 3 in Form von in Bezug auf die Umfangsrichtung 7 spiegelsymmetrischen Sechsecken ausgebildet sind und die zweiten bzw. dritten Blöcke 9, 10 der zweiten bzw. dritten Profilblockreihe 4, 5 polygonale Blöcke mit komplexen Geometrien sind. Zur vereinfachten Darstellung ist hier lediglich einer der Blöcke 8, 9, 10 der jeweiligen Profilblockreihe 3, 4, 5 mit den relevanten Bezugszeichen versehen.

Die hexagonal geformten ersten Blöcke 8 weisen drei Kantenpaare 11, 12, 13 mit jeweils einander gegenüberliegenden Kanten 14a, 14b, 15a, 15b, 16a, 16b auf, wobei die Kanten 14a, 14b, 15a, 15b, 16a, 16b jeweils eine Länge von mindestens 20 mm aufweisen. Die beiden parallel verlaufenden Kanten 14a, 14b des ersten Kantenpaares 11 sind in Umfangsrichtung 7 orientierte Kanten, an deren Enden jeweils eine zweite Kante 15a bzw. 15b sowie eine dritte Kante 16a bzw. 16b angebunden und mit einem Winkel dazu angestellt sind. Die Kanten 15a, 15b, 16a, 16b des zweiten bzw. dritten Kantenpaares 12, 13 sind ebenfalls jeweils parallel zueinander verlaufend angeordnet. Die ersten Kanten 15a, 16a des zweiten bzw. dritten Kantenpaares 12, 13 an einem ersten Ende des jeweiligen ersten Blocks 8 in Umfangsrichtung 7 sind über eine erste Ecke 19a miteinander verbunden und die zweiten Kanten 15b, 16b sind an einem in Umfangsrichtung 7 entgegengesetzten Ende des jeweiligen ersten Blocks 8 über eine zweite Ecke 19b miteinander verbunden. Die beiden Ecken 19a, 19b des jeweiligen ersten Blocks 8 liegen auf einer parallel zur Umfangsrichtung 7 angeordneten Symmetrieachse 20 des jeweiligen ersten Blocks 8. Der von oben bzw. radial außen betrachtet in Form eines Hexagons ausgebildete erste Block 8 ist demnach so ausgeformt und angeordnet, dass die Spitzen bzw. die Ecken 19a, 19b jeweils in Umfangsrichtung 7 zeigen. Dadurch wird ein weicher, und dadurch entsprechend leiser, Einlauf in den Footprint gewährleistet.

Während die Kanten 14a, 14b des ersten Kantenpaares 11 des jeweiligen ersten Blocks 8 parallel zur Umfangsrichtung 7 verlaufen, schließen die übrigen Kanten 15a, 15b, 16a, 16b jeweils mit der Umfangsrichtung 7 sowie mit einer axialen Richtung 17 des Fahrzeugluftreifens 1 einen Winkel ein. Die Kanten 15a, 15b, 16a, 16b des zweiten bzw. dritten Kantenpaares 12, 13 sind also schräg zur Umfangsrichtung 7 sowie schräg zur axialen Richtung 17 des Fahrzeugluftreifens 2 bzw. zur Querrichtung 18 des Laufstreifens 2 ausgerichtet. Zwischen Kanten 15a, 15b bzw. 16a, 16b in Umfangsrichtung unmittelbar hintereinander liegender, erster Blöcke 8 ist eine schräg zum genannten Winkel ausgebildete Querrille 6 vorgesehen, die je zwei benachbarte erste Blöcke 8 voneinander trennt. Die Umfangsrillen 21, 22 und die Querrillen 6 weisen eine Profiltiefe 27 zwischen 7,5 mm und 15 mm auf.

Die Kanten 15a, 15b des zweiten Kantenpaares 12 des jeweiligen ersten Blocks 8 sind mit einem ersten Winkel von etwa 40° in Bezug auf die Querrichtung 18 des Laufstreifens 2 ausgerichtet und die Kanten 16a, 16b des dritten Kantenpaares 13 desselben ersten Blocks 8 sind mit einem zweiten Winkel von etwa -40° in Bezug auf die Querrichtung 18 des Laufstreifens 2 ausgerichtet. Zur Realisierung der Symmetrie des ersten Blocks 8 ist der Betrag der beiden Winkel gleich groß.

Die ersten Blöcke 8 sind vorliegend sowohl in Umfangsrichtung 7 als auch in axialer Richtung 17 des Fahrzeugluftreifens 1 teilweise überlappend angeordnet. Ferner sind die ersten Blöcke 8 in Umfangsrichtung 7 alternierend seitlich zueinander versetzt angeordnet, sodass sich über den Umfang des Fahrzeugluftreifens ein zickzackförmiger Verlauf der ersten Profilblockreihe 3 mit einander in Umfangsrichtung 7 und in Querrichtung 18 überlagernden, ersten Blöcken 8 ergibt.

Vorliegend sind die Kanten 14a, 14b des ersten Kantenpaares 11 des jeweiligen ersten Blocks 8 länger als die Kanten 15a, 15b, 16a, 16b des zweiten und dritten Kantenpaares 12, 13 desselben ersten Blocks 8 ausgebildet. Die in Umfangsrichtung 7 langgezogene Form des jeweiligen ersten Blocks 8 sorgt dafür, dass bei Trockenbremsmanövern ausreichend Stabilität vorhanden ist.

Vorliegend sind die Kanten 14a, 14b des ersten Kantenpaares 11 des jeweiligen ersten Blocks 8 über ihre Längserstreckung, also in Umfangsrichtung 7, gefast, also mit einer Fase 33 ausgebildet. Die zweiten Blöcke 9 der zweiten Profilblockreihe 4 sowie die dritten Blöcke 10 der dritten Profilblockreihe 5 weisen jeweils an einer der jeweiligen Kante 14a, 14b des ersten Kantenpaares 11 des jeweiligen ersten Blocks 8 gegenüberliegenden Seite der jeweiligen Umfangsrille 21, 22 eine sich im Wesentlichen parallel dazu erstreckende Kante 23, 24 auf. Diese Kante 23, 24 des zweiten bzw. dritten Blocks 9, 10 ist analog zu den Kanten 14a, 14b gefast ausgebildet, also mit einer zugehörigen Fase 33 versehen. Die einander gegenüberliegenden Fasen 33 einer Umfangsrille 21, 22 sind spiegelverkehrt zueinander ausgebildet. Die Fasen 33 weisen in Bezug auf eine Oberfläche 28 des Laufstreifens 2 jeweils einen Winkel zwischen 40° und 50°, hier etwa 45°, auf. Die Fasen 33 verhindern ein Einrollen der jeweiligen Kante 14a, 14b, 23, 24, wodurch der jeweilige erste Block 8 stabilisiert wird. Trotzdem kann der jeweilige erste Block 8 weitestgehend frei von Anbindungen bleiben, was die Traktion bei Offroad-Anwendung optimiert.

Jede der Umfangsrillen 21, 22 ist in umfangsorientierte bzw. parallel zur Umfangsrichtung 7 orientierte Abschnitte 25 sowie in schräg zur Umfangsrichtung 7 orientierte Abschnitte 26 unterteilt, die aufgrund der hexagonalen Ausgestaltung der ersten Blöcke 8 sowie der entsprechenden Anordnung der ersten Profilblockreihe 3 in Umfangsrichtung 7 alternierend angeordnet sind. Lediglich die schräg zur Umfangsrichtung 7 orientierten Abschnitte 26 sind in Umfangsrichtung 7 mit wechselnder bzw. entgegengesetzter Orientierung ausgebildet, woraus sich die erwähnte Zickzackform der jeweiligen Umfangsrille 21, 22 ergibt.

Zur Verbesserung der akustischen Eigenschaften sowie der Aquaplaning-Eigenschaften des Fahrzeugluftreifens 1 ist vorgesehen, dass die umfangsorientierten Abschnitte 25 im Querschnitt breiter ausgebildet sind als die schräg zur Umfangsrichtung 7 orientierten Abschnitte 26 sowie die Querrillen 6. Eine Querrille 6 unterscheidet sich von einem schräg zur Umfangsrichtung 7 orientierten Abschnitt 26 dadurch, dass eine Querrille 6 zwischen zwei in Umfangsrichtung 7 benachbarten ersten Blöcken 8 ausgebildet ist, wobei demgegenüber ein schräg zur Umfangsrichtung 7 orientierter Abschnitte 26 zwischen einem ersten Block 8 einerseits und einem zweiten bzw. dritten Block 9, 10 andererseits ausgebildet ist. Die Querrillen 6 verbinden hier die beiden parallel verlaufenden Umfangsrillen 21, 22 miteinander.

Die ersten Blöcke 8 der ersten Profilblockreihe 3 können in der Draufsicht auf den Laufstreifen 2 im Wesentlichen identisch ausgebildet sein. Vorliegend sind die ersten Blöcke 8 außengeometrisch, also in seiner Erstreckung in Umfangs- und Querrichtung 7 und 18, identisch ausgebildet. Lediglich auf der Oberfläche 28 der ersten Blöcke 8 ausgebildete Feineinschnitte 29 sind hier unterschiedlich ausgebildet. Vorliegend weisen die in den Figuren 1 und 2 nach rechts versetzten ersten Blöcke 8 der ersten Profilblockreihe 3 einen Feineinschnitt 29 in Y-Form auf, jeweils umfassend einen sich im Wesentlichen in Umfangsrichtung erstreckenden ersten Schenkel 30 sowie zwei weitere damit verbundene Schenkel 31, 32, wobei die Schenkel 30, 31, 32 gleichmäßig, also mit einem Winkel von etwa 60° zueinander angeordnet sind. Demgegenüber sind die Feineinschnitte 29 der hier nach links versetzten ersten Blöcke 8 der ersten Profilblockreihe 3 hier zwar auch Y-förmig, jedoch entgegengesetzt ausgerichtet, ausgebildet. Damit kann mit den Feineinschnitten 29 auf den ersten Blöcken 8 für beide Drehrichtungen des Fahrzeugluftreifens 1 derselbe Effekt erzielt werden. Auf den Blöcken 9, 10 der zweiten bzw. dritten Profilblockreihe 4, 5 sind ebenfalls Feineinschnitte vorgesehen, die hier jedoch nicht näher beschrieben werden. Es gilt das für die ersten Blöcke 8 Gesagte entsprechend analog.

### Bezugszeichenliste

- 1: Fahrzeugluftreifen
- 2: Laufstreifen
- 3: Erste Profilblockreihe
- 4: Zweite Profilblockreihe
- 5: Dritte Profilblockreihe
- 6: Querrille
- 7: Umfangsrichtung
- 8: Erste Blöcke der ersten Profilblockreihe
- 9: Zweite Blöcke der zweiten Profilblockreihe
- 10: Dritte Blöcke der dritten Profilblockreihe
- 11: Erstes Kantenpaar des ersten Blocks
- 12: Zweites Kantenpaar des ersten Blocks
- 13: Drittes Kantenpaar des ersten Blocks
- 14a, 14b: Kante des ersten Kantenpaars
- 15a, 15b: Kante des zweiten Kantenpaars
- 16a, 16b: Kante des dritten Kantenpaars
- 17: Axiale Richtung
- 18: Querrichtung
- 19a, 19b: Ecke
- 20: Symmetrieachse
- 21: Erste Umfangsrille
- 22: Zweite Umfangsrille
- 23: Kante des zweiten Blocks
- 24: Kante des dritten Blocks
- 25: Umfangsorientierter Abschnitt der Umfangsrille
- 26: Schräg/quer Umfangsrichtung orientierter Abschnitt der Umfangsrille
- 27: Profiltiefe
- 28: Oberfläche des Laufstreifens
- 29: Feineinschnitt
- 30: Erster Schenkel des Feineinschnitts
- 31: Zweiter Schenkel des Feineinschnitts
- 32: Dritter Schenkel des Feineinschnitts
- 33: Fase

## Patentansprüche

1. Fahrzeugluftreifen (1), umfassend einen Laufstreifen (2) mit einer ersten Profilblockreihe (3) aus in Umfangsrichtung (7) hintereinander angeordneten und durch Querrillen (6) voneinander getrennten, sechseckigen ersten Blöcken (8), wobei die ersten Blöcke (8) einander parallele Kantenpaare (11, 12, 13) aufweisen sowie in Bezug auf die Umfangsrichtung (7) des Fahrzeugluftreifens (1) jeweils spiegelsymmetrisch ausgebildet sind, wobei Kanten (14a, 14b) eines ersten Kantenpaares (11) des jeweiligen ersten Blocks (8) parallel zur Umfangsrichtung (7) verlaufen und die übrigen Kanten (15a, 15b, 16a, 16b) jeweils mit der Umfangsrichtung (7) sowie mit einer axialen Richtung (17) des Fahrzeugluftreifens (1) einen Winkel einschließen, **dadurch gekennzeichnet, dass** die Kanten (14a, 14b) des ersten Kantenpaares (11) des jeweiligen ersten Blocks (8) wenigstens abschnittsweise gefast ausgebildet sind.

2. Fahrzeugluftreifen (1) nach Anspruch 1, **dadurch gekennzeichnet, dass** die ersten Blöcke (8) der ersten Profilblockreihe (3) sowohl in Umfangsrichtung (7) als auch in axialer Richtung (17) des Fahrzeugluftreifens (1) teilweise überlappend angeordnet sind.

3. Fahrzeugluftreifen (1) nach Anspruch 2, **dadurch gekennzeichnet, dass** die ersten Blöcke (8) der ersten Profilblockreihe (3) in Umfangsrichtung (7) alternierend seitlich zueinander versetzt angeordnet sind.

4. Fahrzeugluftreifen (1) nach einem der vorhergehenden Ansprüche, **dadurch gekennzeichnet, dass** Kanten (15a, 15b) eines zweiten Kantenpaares (12) des jeweiligen ersten Blocks (8) mit einem ersten Winkel zwischen 15° und 75° in Bezug auf eine Querrichtung (18) des Laufstreifens (2) ausgerichtet sind, und dass Kanten (16a, 16b) eines dritten Kantenpaares (13) des jeweiligen ersten Blocks (8) mit einem zweiten Winkel zwischen -15° und -75° in Bezug auf die Querrichtung (18) des Laufstreifens (2) ausgerichtet sind.

5. Fahrzeugluftreifen (1) nach Anspruch 4, **dadurch gekennzeichnet, dass** zwischen einer der Kanten (15a, 15b) des zweiten Kantenpaares (12) und einer der unmittelbar dazu benachbarten Kanten (16a, 16b) des dritten Kantenpaares (13) eine jeweilige Ecke (19a, 19b) ausgebildet ist, die auf der Symmetrieachse (20) des jeweiligen ersten Blocks (8) liegt.

6. Fahrzeugluftreifen (1) nach einem der vorhergehenden Ansprüche, **dadurch gekennzeichnet, dass** die Länge der jeweiligen Kante (14a, 14b) des ersten Kantenpaares (11) des jeweiligen ersten Blocks (8) größer gleich der jeweiligen Länge der übrigen Kanten (15a, 15b, 16a, 16b) desselben ersten Blocks (8) ist.

7. Fahrzeugluftreifen (1) nach einem der vorhergehenden Ansprüche, **dadurch gekennzeichnet, dass** der Laufstreifen (2) in axialer Richtung (17) des Fahrzeugluftreifens (1) an jedem Ende eine weitere Profilblockreihe (4, 5) aus in Umfangsrichtung (7) hintereinander angeordneten, polygonalen Blöcken (9, 10) aufweist.

8. Fahrzeugluftreifen (1) nach Anspruch 7, **dadurch gekennzeichnet, dass** zwischen einer zweiten Profilblockreihe (4) am in axialer Richtung (17) des Laufstreifens (2) ersten Ende und der ersten Profilblockreihe (3) eine erste Umfangsrille (21) ausgebildet ist, und dass zwischen einer dritten Profilblockreihe (5) am in axialer Richtung (17) des Laufstreifens (2) zweiten Ende und der ersten Profilblockreihe (3) eine zweite Umfangsrille (22) ausgebildet ist.

9. Fahrzeugluftreifen (1) nach Anspruch 8, **dadurch gekennzeichnet, dass** zweite Blöcke (9) der zweiten Profilblockreihe (4) und/oder dritte Blöcke (10) der dritten Profilblockreihe (5) an einer der jeweiligen Umfangsrille (21, 22) gegenüberliegenden Seite einer Kante (14a, 14b) des ersten Kantenpaares (11) des jeweiligen ersten Blocks (8) eine sich im Wesentlichen parallel dazu erstreckende Kante (23, 24) aufweisen, die wenigstens abschnittsweise gefast ausgebildet ist.

10. Fahrzeugluftreifen (1) nach Anspruch 8 oder Anspruch 9, **dadurch gekennzeichnet, dass** umfangsorientierte Abschnitte (25) der jeweiligen Umfangsrille (21, 22) im Querschnitt breiter ausgebildet sind als schräg oder quer zur Umfangsrichtung (7) orientierte Abschnitte (26) der jeweiligen Umfangsrille (21, 22) und/oder als die Querrillen (6) zwischen den ersten Blöcken (8) der ersten Profilblockreihe (3).

11. Fahrzeugluftreifen (1) nach einem der vorhergehenden Ansprüche, **dadurch gekennzeichnet, dass** die Umfangsrillen (21, 22) und die Querrillen (6) eine Profiltiefe (27) zwischen 7,5 mm und 15 mm aufweisen.

12. Fahrzeugluftreifen (1) nach einem der vorhergehenden Ansprüche, **dadurch gekennzeichnet, dass** die Kanten (14a, 14b, 15a, 15b, 16a, 16b) des jeweiligen ersten Blocks (8) weisen jeweils eine Länge von mindestens 20 mm auf.

13. Fahrzeugluftreifen (1) nach einem der vorhergehenden Ansprüche, **dadurch gekennzeichnet, dass** die ersten Blöcke (8) der ersten Profilblockreihe (3) in der Draufsicht im Wesentlichen identisch ausgebildet sind.

14. Fahrzeugluftreifen (1) nach einem der vorhergehenden Ansprüche, **dadurch gekennzeichnet, dass** die jeweilige Fase (33) der jeweiligen gefasten Kante (14a, 14b, 23, 24) in Bezug auf eine Oberfläche (28) des Laufstreifens (2) einen Winkel zwischen 40° und 50° aufweist.

15. Fahrzeugluftreifen (1) nach einem der vorhergehenden Ansprüche, **dadurch gekennzeichnet, dass** jeder erste Block (8) wenigstens einen Feineinschnitt (29) aufweist, der einen sich im Wesentlichen in Umfangsrichtung erstreckenden ersten Schenkel (30) sowie einen damit verbundenen zweiten Schenkel (31) und dritten Schenkel (32) aufweist, wobei der zweite und dritte Schenkel (31, 32) in Bezug auf die Längserstreckung des ersten Schenkels (30) spiegelsymmetrisch ausgeformt sowie jeweils mit der Umfangsrichtung (7) sowie mit einer Querrichtung (18) des Fahrzeugluftreifens (1) einen Winkel einschließen.
